Europäisches Patentamt

European Patent Office

Office européen des brevets

(11) Veröffentlichungsnummer: **0 097 792**
**B1**

(12) # EUROPÄISCHE PATENTSCHRIFT

(45) Veröffentlichungstag der Patentschrift:
15.01.86

(51) Int. Cl.⁴: **A 47 J 41/02**, B 65 D 47/40,
A 47 G 19/14

(21) Anmeldenummer: 83104312.0

(22) Anmeldetag: 02.05.83

(54) Isolierkanne mit Ausgiesser.

(30) Priorität: 24.06.82 DE 3223609

(43) Veröffentlichungstag der Anmeldung:
11.01.84 Patentblatt 84/2

(45) Bekanntmachung des Hinweises auf die Patenterteilung:
15.01.86 Patentblatt 86/3

(84) Benannte Vertragsstaaten:
AT BE CH DE FR GB IT LI LU NL SE

(56) Entgegenhaltungen:
DE-C-55 286
US-A-2 684 184
US-A-2 785 841
US-A-2 848 145
US-A-2 889 080

(73) Patentinhaber: Rotpunkt Dr. Anso Zimmermann,
Industriestrasse, D-6434 Niederaula / Bad
Hersfeld (DE)

(72) Erfinder: Zimmermann, Anso, Dr., Seilerweg 34,
D-6434 Niederaula / Bad Hersfeld (DE)

(74) Vertreter: Körber, Wolfhart, Dr., Patentanwälte
Dipl.- Ing. H. Mitscherlich Dipl.- Ing. K.
Gunschmann Dr.rer.nat. W. Körber Dipl.Ing. J.
Schmidt- Evers Dipl.- Ing. W. Melzer
Steinsdorfstrasse 10, D-8000 München 22 (DE)

EP 0 097 792 B1

## Beschreibung

Die Erfindung bezieht sich auf eine Isolierkanne mit einem wärmeisolierenden Innenbehälter und einem diesen umgebenden und aufnehmenden Mantelkörper, der unmittelbar oder auf einem gesonderten Kopfteil einen vorzugsweise aus Kunststoff gespritzten Ausgießer aufweist.

Eine Isolierkanne dieser Art ist aus der US-A-2, 684, 184 bekannt, jedoch ohne einen Tropfenfänger.

Ausgießer derartiger Kannen neigen wie die üblichen Kaffee- oder Teekannen dazu, nachzutropfen. Beim Abriß des über die Ausgießkante des Ausgießers fließenden Flüssigkeitstromes ist es unvermeidlich, daß sich Tropfen bilden, welche am Ausgießer außen am Mantelkörper herunterlaufen, schlimmstenfalls auf die Unterlage, z.B. das Tischtuch.

Neben getrennt anzubringenden Tropfenfängern gibt es auch Formgestaltungen von Ausgießern, welche ein derartiges Nachtropfen zumindest vermindern sollen.

Eine Formgestaltung des Ausgießers ist aus der DE-C 55 286 bekannt. Diese betrifft eine gewöhnliche Kanne, wobei der Kannenausgießer mit einer Rückflußrinne für nachfließende Tropfen versehen ist. Die Rinne ist an die Ausgießkante nach unten anschließend angeformt, hat ein spitzwinkeliges und scharfkantiges Profil und fällt über die Breite der Ausgießkante nach beiden Seiten hin ab. Die untere Begrenzung der Rinne ragt über die Ausgießkante hinaus.

Bei Isolierkannen der eingangs genannten Art ergeben sich jedoch besondere Probleme, da der aus Kunststoff gespritzte Mantelkörper bzw. Ausgießer keine ausreichend scharfkantige Formgebung des Tropfenfängers zuläßt und die Adhäsionseigenschaften der Flüssigkeiten gegenüber solchen Kunststoffen erfahrungsgemäß für einen tropfenförmigen Abriß ungünstig ist.

Aus der US-A- 2, 785, 841 ist ein Tropfenfänger, bestehend aus einer auf eine Flasche aufstülpbaren Kappe bekannt, an deren kreisförmigen Auslauföffnung sich eine Ringlippe befindet, die peripher in Form einer Hohlkehle unterschnitten ist. Die untere Begrenzung dieser Hohlkehle geht mehr oder weniger direkt in einen Ringabschnitt der Kappe über, der die Verbindung mit der Flasche herstellt. Eine freie Kante an der unteren Begrenzung fehlt also. Dies ist für einen tropfenfreien Abriß der Flüssigkeit ungünstig.

Dieser bekannte Tropfenfänger gehört zudem zur Gattung der getrennt anzubringenden Tropfenfänger und läßt sich bei einer Isolierkanne mit wärmeisolierendem Innenbehälter und diesen aufnehmenden Mantelkörper nicht verwenden.

Der Erfindung liegt die Aufgabe zugrunde, für vorzugsweise aus Kunststoff gespritzte Ausgießer derartiger Isolierkannen einen Tropfenfänger zu bilden, der das Nachtropfen bei Abriß des Flüssigkeitsstromes weitgehend verhindert und eventuell entstehende Tropfen optisch nicht störend auffängt.

Diese Aufgabe wird erfindungsgemäß dadurch gelöst, daß an die Ausgießkante des Ausgießers nach unten anschliessend eine Hohlkehle angeformt ist, die sich parallel zur Ausgießkante erstreckt, und daß die die Hohlkehle auf der von der Ausgießkante abgewandten Seite begrenzende freie Unterkante des Ausgießers nur so weit vorragt wie die Ausgießkante.

Diese Hohlkehle trägt der bei aus Kunststoff gespritzten Ausgießern möglichen Formgebung Rechnung. Sie tritt ästhetisch nicht in Erscheinung, da sie als Tropfenfänger nicht vorspringt und ist sicherlich leichter an den Ausgießer anzuformen als dies bei dem bekannten Kannenausgießer mit Rückflußrinne der Fall ist. Die Begrenzung der Hohlkehle durch zwei gleich weit ragende Kanten übereinander gewährleistet überraschend gut das Auffangen der Tropfen in der Hohlkehle. Der Abstand der Ausgießkante und die Hohlkehle begrenzenden Unterkante beträgt etwa 2 bis 4 mm.

In zweckmäßiger Ausgestaltung erstreckt sich die Hohlkehle über die gesamte wirksame Breite der Ausgießkante parallel zu dieser.

Nachstehend ist die Erfindung anhand der Zeichnung erläutert. Es zeigen:

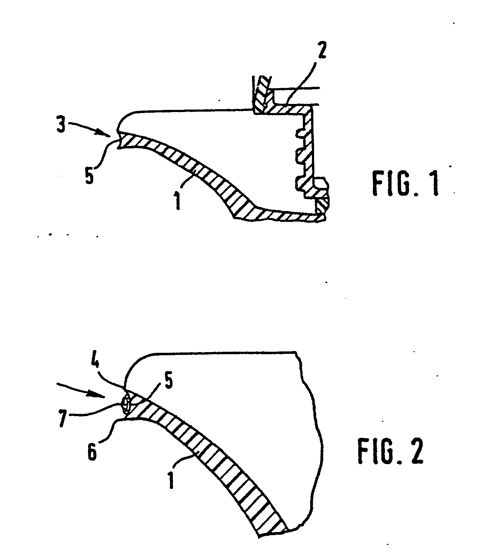

Fig. 1 in Schnittansicht und im Ausschnitt den Ausgießer einer Isolierkanne;

Fig. 2 im Schnitt eine vergrößerte Ansicht des Bereichs der Ausgießkante.

Der aus Kunststoff gespritzte Ausgießer 1 hat einen nur teilweise sichtbaren Schraubverschluß 2. Die vordere Ecke 3 des Ausgießers 1 hat eine Ausgießkante 4, an welche sich nach unten eine Hohlkehle 5 anschließt, die ihrerseits unten von einer Kante 6 begrenzt wird. Die Kanten 4 und 6 ragen gleich weit vor. Die Hohlkehle 5 erstreckt sich über die gesamte wirksame Breite der Ausgießkante parallel zu dieser. An der Ausgießkante 4 sich eventuell bildende Tropfen, wie bei 7 angedeutet, fangen sich in der Hohlkehle 5.

## Patentansprüche

1. Isolierkanne mit einem wärmeisolierenden Innenbehälter und einem diesen umgebenden und aufnehmenden Mantelkörper, der unmittelbar oder an einem gesonderten Kopfteil einen vorzugsweise aus Kunststoff gespritzten Ausgießer aufweist,
dadurch gekennzeichnet,
daß an die Ausgießkante (4) des Ausgießers (1) nach unten anschließend eine Hohlkehle (5) angeformt ist, die sich parallel zur Ausgießkante (4) erstreckt, und daß die die Hohlkehle (5) auf der von der Ausgießkante (4) abgewandten Seite begrenzende freie Unterkante (6) des Ausgießers (1) nur so weit vorragt wie die Ausgießkante (4).

2. Isolierkanne nach Anspruch 1, dadurch gekennzeichnet, daß sich die Hohlkehle (5) über die gesamte wirksame Breite der Ausgießkante
(4) parallel zu dieser erstreckt.

## Claims

1. An insulating jug having a heat-insulating inner container and a casing surrounding and including said inner container, said casing comprising, either directly or at a special headpiece, a preferably injection-molded pouring spout,

caracterized in

that a channel (5) is formed on the pouring edge (4) of the pouring spout (1) below and parallel to said pouring edge (4) and that the free lower edge (6) of the pouring spout (1), which limits the channel (5) on the side turned away from the pouring edge (4), extends only as far forward as said pouring edge (4).

2. Insulating jug according to claim 1, caracterized in that said channel (5) extends parallel to the pouring edge (4) along the entire effecive pouring width.

## Revendications

1. Récipient isolant, avec un récipient intérieur isolant thermiquement ainsi qu'avec un corps enveloppant, qui entoure et reçoit ce dernier et qui présente, directement ou sur une partie de tête séparée, un bec-verseur de préférence injecté en matière plastique, caractérisé en ce que sur le bord verseur (4) du bec-verseur (1) il est formé une gorge (5), qui s'y raccorde vers le bas, s'étend parallèlement au bord verseur (4) et que le bord inférieur libre (6) du bec-verseur (1), bord limitant la gorge (5) sur le côté opposé au bord verseur (4), n'avance pas plus que le bord verseur (4).

2. Récipient isolant suivant la revendication 1, caractérisé en ce que la gorge (5) est parallèle au bord verseur (4) sur toute la largeur active de celui-ci.

**FIG. 1**

**FIG. 2**